# EUROPÄISCHE PATENTSCHRIFT

(11) **EP 1 447 143 B1**
(45) Veröffentlichungstag und Bekanntmachung des Hinweises auf die Patenterteilung: **23.12.2009**
(21) Anmeldenummer: 04001293.2
(22) Anmeldetag: 22.01.2004
(51) Int. Cl.: B05C 11/10, B29B 13/02

(54) **Verfahren und System zum kontrollierten Bereitstellen eines fliessfähigen Mediums**
Method and system for the controlled preparation of a fluid
Procédé et système de préparation controlée d'un fluide

(30) Priorität: 15.02.2003 DE 10306387
(43) Veröffentlichungstag der Anmeldung: 18.08.2004
(73) Patentinhaber: Robatech AG, 5630 Muri (CH)
(72) Erfinder: Kappeler, Roman, 5630 Muri (CH); Schoch, Beat, 5647 Oberrüti (CH)
(74) Vertreter: OK pat AG

(56) Entgegenhaltungen:
- EP-A- 0 286 065
- US-A- 5 814 790

## Beschreibung

System, das fliessfähiges Medium (z.B. Klebstoff oder Dichtungsmasse) bereit stellt, sowie ein Verfahren zum Bereitstellen von fliessfähigem Medium.

### Gebiet der Erfindung

Die vorliegende Erfindung bezieht sich auf Vorrichtungen, Systeme und Verfahren zum Bereitstellen von fliessfähigem Medium, insbesondere von Klebstoff oder Dichtmasse.

### Hintergrund der Erfindung, Stand der Technik

In zahlreichen industriellen Prozessen kommen Klebstoffe, Dichtmassen und ähnliches zur Anwendung, die in flüssiger Form auf ein Werkstück aufgetragen bzw. aufgespritzt werden. Die Bestandteile eines entsprechenden Auftragssystems sind typischerweise eine Leitungseinheit in Form einer beheizbaren Schlaucheinheit, durch welche die fliessfähige Masse aus einem Behälter zu einer Abgabeeinheit gefördert wird, und eine an diese Leitungseinheit anschliessende Abgabeeinheit, zum Beispiel in Form einer Spritzpistole.

Klebstoffe und Dichtmassen mit sich über die Zeit verändernder Viskosität bei konstanter Temperatur werden dem Verbraucher üblicherweise in fester Form oder hochviskosem Zustand angeliefert und werden in einen Behälter gefüllt, der im allgemeinen oben eine weite Behälteröffnung aufweist. Der Klebstoff, bzw. die Dichtmasse, muss dann vor seiner Abgabe aus dem Behälter, im Allgemeinen durch Wärmezufuhr, verflüssigt werden. Beispiele solcher Systeme sind der Deutschen Gebrauchsmusterschrift DE 201 04 697 U1 und der Deutschen Offenlegungsschrift DE 44 18 068 A1 zu entnehmen. Die Deutsche Gebrauchsmusterschrift DE 201 04 697 U1 betrifft eine Vorrichtung mit einem Leimbecken, das beheizbar ist. Insbesondere geht es um eine Walzenauftragsystem bei dem aufgeschmolzener Leim direkt in den Leimkopf eintritt und von dort einer Walze zugeführt wird. In einer Ausführungsform ist eine Kühlung vorgesehen, die beim Wechseln eines Vorratsbehälters zum Einsatz kommt. Die Deutsche Offenlegungsschrift DE 44 18 068 A1 betrifft primär eine Spritzdüse, deren Austrittsbereich gekühlt werden kann, um ein homogenes Auftragsbild des Klebstoffs zu erreichen.

Die gattungsbildende Europäische Patentveröffentlichungsschrift EP-A2-0 286 065 offenbart ein Verfahren und ein System zum Schmelzen und Kühlen eines Klebstoffs, jedoch keine integrierte Vorrichtung zum Messen des bereitstehenden Klebstoffs.

Das Patent US 5,814,790 hingegen offenbart ein Verfahren und eine Vorrichtung zum Schmelzen von thermoplastischem Material, die eine Messvorrichtung des geschmolzenen thermoplastischen Materials umfasst. Diese Vorrichtung sieht allerdings keine Kühlvorrichtung für das Steuern des Schmelzens vor.

Üblicherweise wird der Behälter nach dem Einfüllen des Klebstoffs, bzw. die Dichtmasse, mit einer sogenannten Folgeplatte versehen, deren Aussenkontur dem Querschnitt der Behälterinnenfläche entspricht, und die sich durch die Behälteröffnung in den Behälter abgesenkt. Die Masse wird dann erwärmt und unter dem Druck der Folgeplatte und/oder unter der Wirkung einer Förderpumpe über die Leitungseinheit aus dem Behälter abgegeben, um an den Ort ihrer Verwendung gebracht zu werden, während die Folgeplatte nach und nach immer weiter in den Behälter einfährt.

Die Verarbeitung von derartigen Medien ist nicht ganz unproblematisch, da die geeigneten Stoffe oft einer starken Veränderung der Fliessfähigkeit (Viskosität), zum Beispiel durch Temperatur- und Druckänderungen, unterliegen. Die geeigneten Stoffe können auch über die Zeit einer Änderung der Viskosität bei konstanter Temperatur unterliegen. Zum Teil sind diese Stoffe auch feuchtigkeitsempfindlich, zum Beispiel wenn es sich um feuchtigkeitsvernetzende Stoffe handelt. Des weiteren kommt es bei einigen dieser Stoffe zu Änderungen der Viskosität, wenn das Medium altert. Wieder andere Stoffe zeigen gewisse Veränderungen der Eigenschaften, wenn Sie mehrmals erwärmt wurden, oder wenn sie Feuchtigkeit ausgesetzt sind.

Seit einiger Zeit kommt insbesondere Polyurethanleim (PUR) als Klebstoff besonderer Güte zum Einsatz. Bei PUR findet eine Vernetzung statt, die bereits bei tiefen Temperaturen (ungefähr 40°C) beginnt. Je höher die Temperatur des PURs ansteigt, desto schneller vernetzt das PUR und die Viskosität nimmt zu. Dies geschieht auch wenn keine Feuchtigkeit vorhanden ist. PUR hat den weiteren Nachteil, dass Feuchtigkeit, z.B. Umgebungsfeuchtigkeit, eine Beschleunigung der Vernetzung bewirkt. Dies führt zu verschiedenen Problemen. Als Beispiel ist der grosse Reinigungsaufwand von dem Behälter und von allen anderen Komponenten zu nennen. Es muss zum Beispiel sicher gestellt werden, dass der PUR Leim nicht im Behälter oder an anderen Stellen des Systems aushärtet, da er nicht mehr fliessfähig gemacht werden kann, oder da das mehrfache Aufschmelzen die Eigenschaften des PURs verändert. PUR Leime sind auch problematisch, da bei der Verarbeitung giftige Dämpfe entstehen können. Diese Dämpfe können zum Beispiel Erkrankungen der Atemwege oder Hauterkrankungen auslösen. Aus diesem Grund müssen gewisse maximale Arbeitsplatzkonzentrationen (MAK-Wert) eingehalten werden.

Kritisch ist auch die Tatsache, dass Klebstoffmasse oder Dichtmasse, die einmal aufgeschmolzen wurde möglichst bald verbraucht werden sollte, da sich ansonsten die Qualität verändert. Ein unnötiges Erwärmen des Mediums hat einen negativen Einfluss auf dessen Eigenschaften.

Deshalb stellt sich die Aufgabe eine Vorrichtung und entsprechende Systeme zu schaffen, bei denen jeweils nur so viel Medium geschmolzen wird, wie benötigt.

Ausserdem stellt sich die Aufgabe, dass die Vorrichtung und das System einfach zu reinigen sein soll, falls trotzdem das Medium in der Vorrichtung oder dem System ausgehärtet sein sollte.

Der Erfindung liegt die Aufgabe zugrunde entsprechende Verfahren bereit zu stellen, nach denen jeweils nur so viel Medium geschmolzen wird, wie benötigt.

### Zusammenfassung der Erfindung

Die Aufgabe wird gelöst durch ein System nach Anspruch 1, und ein Verfahren nach Anspruch 12.

In den Unteransprüchen sind weitere vorteilhafte Ausgestaltungsformen der Erfindung aufgeführt.

### Abbildungen

Im Folgenden werden weitere Einzelheiten und Vorteile der Erfindung anhand von Ausführungsbeispielen und teilweise mit Bezug auf die Zeichnung ausführlich beschrieben. Alle Figuren sind schematisiert und nicht maßstäblich, und entsprechende konstruktive Elemente sind in den verschiedenen Figuren mit gleichen Bezugszeichen versehen, auch wenn sie im Einzelnen unterschiedlich gestaltet sind. Es zeigen:
- **Fig. 1**: eine erste Ausführungsform der Erfindung in Seitenansicht;
- **Fig. 2**: eine Schnittansicht der ersten Ausführungsform der Erfindung;
- **Fig. 3**: eine Draufsicht der ersten Ausführungsform der Erfindung;
- **Fig. 4**: eine schematisierte Schnittansicht einer weiteren Ausführungsform der Erfindung;
- **Fig. 5**: ist ein Blockdiagramm der Heizvorrichtung, gemäss Erfindung;
- **Fig. 6**: ist ein Temperaturdiagramm, gemäss Erfindung;
- **Fig. 7**: ist ein möglicher Umlaufkühler, gemäss Erfindung.

### Detaillierte Beschreibung der Ausführungsbeispiele

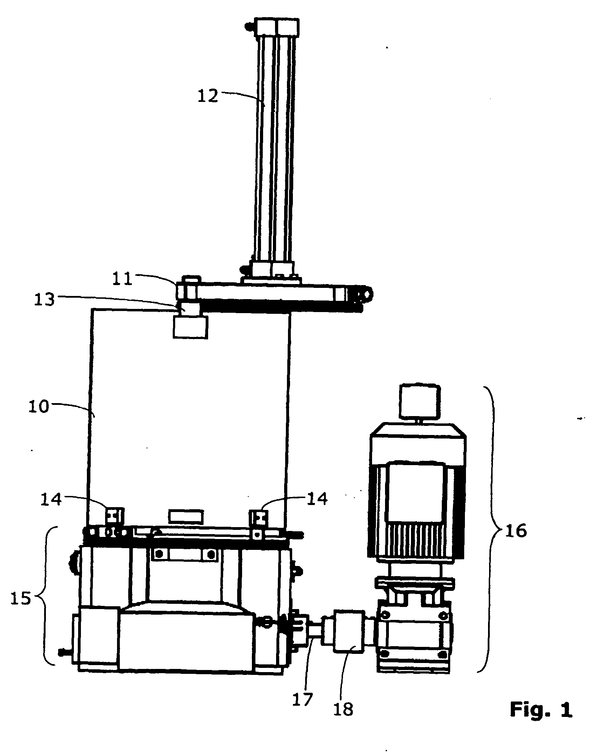

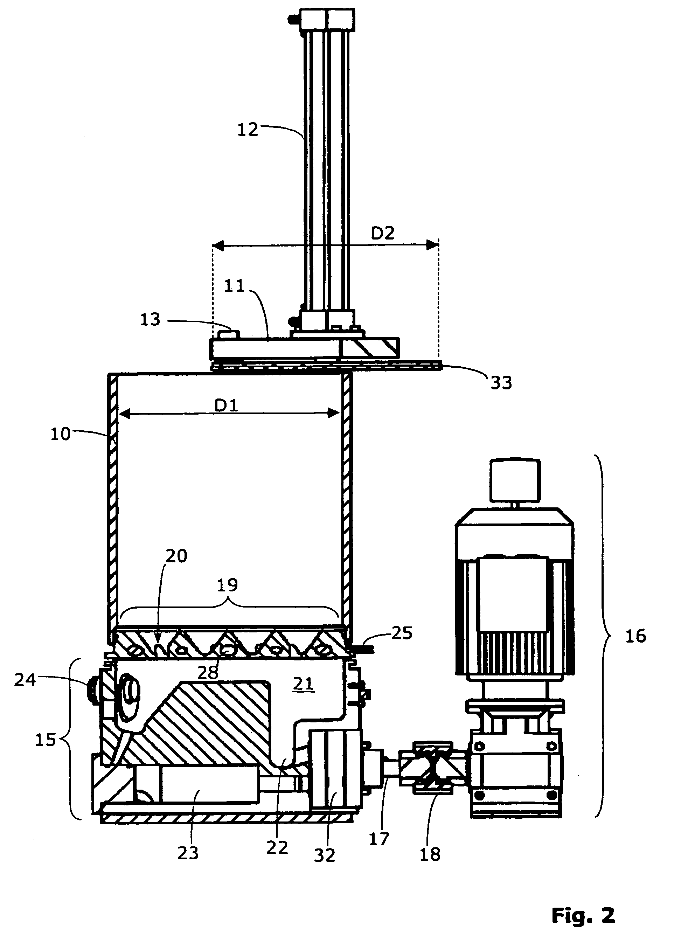

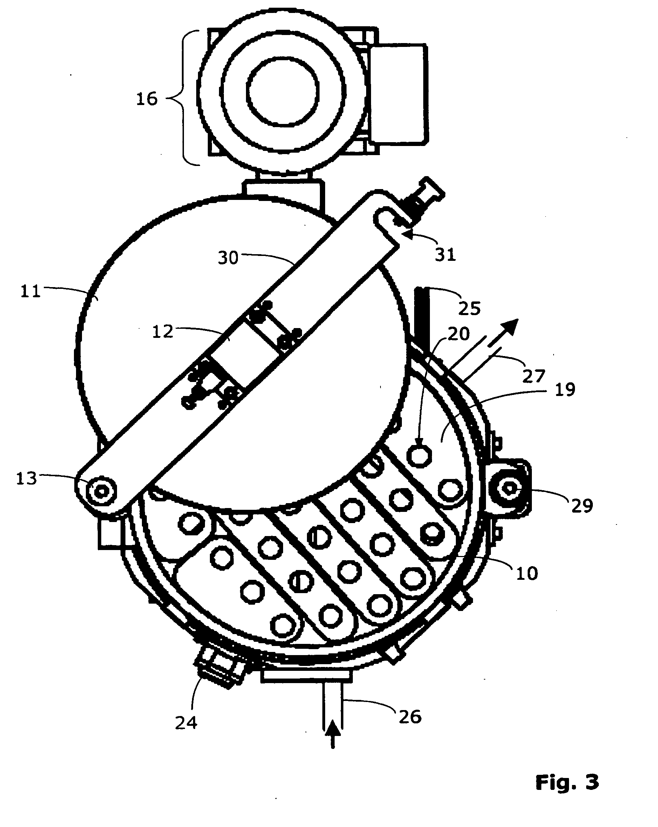

Die Erfindung betrifft eine Vorrichtung zur Verwendung in einem System, das ein Medium (z.B. Klebstoff) verarbeitet, wie beispielhaft in den Fig. 1 bis 3 gezeigt. Fig. 1 ist eine Seitenansicht der Elemente eines Systems, das ein Medium (z.B. Klebstoff) verarbeitet. In Fig. 2 ist ein Schnitt durch das System und in Fig. 3 eine Draufsicht des Systems gezeigt. Das System ist dazu ausgelegt Medien zu verarbeiten, die bei einer Temperaturerhöhung einen Änderung in einen Zustand niedrigerer Viskosität erfahren um damit die Fliessfähigkeit des Klebstoffs zu erhöhen.

Die Vorrichtung umfasst einen Behälter 10, zum Beispiel in Form eines zylinderförmigen Klebstofftanks, zur Aufnahme des Mediums (zum Beispiel PUR-Granulat oder PUR-Blöcke). Der Behälter 10 ist mit einer Schmelzvorrichtung versehen, die eine lokale Temperaturerhöhung des Mediums hervorruft, um einen Teil des Mediums in einen Zustand niedrigerer Viskosität zu überführen.

In dem vorliegenden Ausführungsbeispiel ist die Schmelzvorrichtung in einen Grill 19 integriert, der sich im unteren Bereich des Behälters 10 befindet. Der Grill 19 ist mit Heizmitteln versehen, mit denen die Temperatur des Grills 19 kontrolliert angehoben werden kann. Zu diesem Zweck kann der Grill 19 zum Beispiel mit einer oder mit mehreren Heizpatronen 25 ausgerüstet sein. Der Grill 19 bildet einen Austrittsbereich mit mindestens einem Durchlass 20 für den Teil des Mediums mit niedrigerer Viskosität. Die Vorrichtung zeichnet sich dadurch aus, dass im Austrittsbereich eine Kühlvorrichtung 26, 27 angeordnet ist, um den Durchlass 20 des Grills 19 aktiv abkühlen zu können, nachdem ein Anteil des Teils des Mediums mit niedrigerer Viskosität durch den Durchlass 20 hindurch getreten ist. In dem gezeigten Ausführungsbeispiel umfasst die Kühlvorrichtung eine Eintrittsöffnung 26 und eine Austrittsöffnung 27. Diese Öffnungen 26, 27 sind mit einem System von Kanälen 28 verbunden (siehe Fig. 2), die den Grill 19 durchziehen. Es kann zum Beispiel eine Pumpe vorgesehen werden, die über die Eintrittsöffnung 26 eine Kühlflüssigkeit durch die Kanäle 28 des Grills 19 führt. Die Flüssigkeit tritt dann an der Austrittsöffnung 27 aus der Kühlvorrichtung aus. Vorzugsweise haben der Kanal oder die Kanäle gemäss Erfindung einen Durchmesser zwischen 5mm und 20mm. Besonders bewährt hat sich ein Durchmesser zwischen 7mm und 10mm. Gut geeignet sind Kanäle, die eine möglichst grosse Grenzfläche zum Material des Grills 19 haben, da so der Wärmeaustausch verbessert wird.

Zu diesem Zweck können die Kanäle zum Beispiel mit Gewindegängen versehen sein.

Vorzugsweise umfasst die Kühlvorrichtung ein Kühlsystem, das zum Beispiel als Kälteverdichter, Wärmetauscher oder Peltier-Kühler ausgelegt ist, und der Flüssigkeit die Wärme entzieht. Als Wärmetauscher eignet sich zum Beispiel ein Luft - Wasser Wärmetauscher. Das erwärmte Kühlwasser wird, nachdem es den Durchlassbereich umströmt hat, durch einen Kühlerblock geführt. Ein Lüfter bläst Umgebungsluft durch diesen Kühlerblock und kühlt dabei das Kühlwasser ab. Die Abwärme wird an die Umgebung übertragen. Vorzugsweise umfasst der Wärmetauscher einen Kühlmitteltank. Das Kühlwasser wird aus dem Tank mittels Pumpe durch die Kanäle 28 des Grills 19 gefördert. Es ist ein Vorteil eines solchen Wärmetauschers, dass er wegen des geschlossenen Kühlwasserkreislaufs umweltfreundlich ist. Vorzugsweise wird ein Wärmetauscher im Zusammenhang mit der Erfindung eingesetzt, der eine Leistung zwischen 50 Watt und 10 KWatt und eine Förderleistung zwischen 0.5 l/min und 20 l/min hat. Besonders geeignet ist ein Wärmetauscher, der eine Leistung zwischen 100 Watt und 500 Watt und eine Förderleistung zwischen 1 l/min und 5 l/min hat.

Anstatt eines Luft - Wasser Wärmetauschers kann auch ein Luft - Öl Wärmetauscher, ein Wasser - Wasser, oder ein Luft - Luft - Wärmetauscher eingesetzt werden.

Als Kälteverdichter eignet sich zum Beispiel ein Gerät, bei dem mittels des Kälteverdichters eine Kühlspirale in einem Kühlmitteltank gekühlt wird. Ein Temperaturregler erfasst die Kühlwassertemperatur und steuert den Kältemittelkreislauf. Die Pumpe fördert ein Kühlmittel durch die Kanäle 28 des Grills 19. Vorzugsweise wird ein Kälteverdichter im Zusammenhang mit der Erfindung eingesetzt, der eine Leistung zwischen 100 Watt und 6 KWatt und eine Förderleistung zwischen 0.5 l/min und 30 l/min hat. Besonders geeignet ist ein Kälteverdichter, der eine Leistung zwischen 100 Watt und 500 Watt und eine Förderleistung zwischen 1 l/min und 5 l/min hat.

Als Peltier-Kühler eignet sich ein Gerät, das Peltier Elemente umfasst, die direkt mit einem Kühlwassertank in Verbindung stehen. Entsprechend der geforderten Kühlleistung kühlen die Peltier Elemente das Kühlwasser. Die Abwärme der Peltiers wird mittels Luft/Wasser an die Umgebung abgeführt. Die Steuerung erfolgt vorzugsweise über die Tanktemperatur. Mit dieser kann die Spannungsversorgung der Peltier Elemente geregelt werden. Dadurch wird eine sehr gute Temperaturstabilität und Lastanpassung erreicht. Eine Pumpe fördert das Kühlwasser im geschlossenen Kreislauf durch die Kanäle 28 des Grills 19. Vorzugsweise wird ein Peltier-Kühler im Zusammenhang mit der Erfindung eingesetzt, der eine Leistung zwischen 20 Watt und 1 KWatt und eine Förderleistung zwischen 0.5 l/min und 20 l/min hat. Besonders geeignet ist ein Peltier-Kühler, der eine Leistung zwischen 100 Watt und 200 Watt und eine Förderleistung zwischen 1 l/min und 5 l/min hat.

Anstatt eine Kühlvorrichtung mit einem geschlossenen Kreislauf zu verwenden, kann auch eine Kühlvorrichtung mit einem offenen Kreislauf verwendet werden. Zu diesem Zweck kann die Kühlvorrichtung zum Beispiel an eine Wasserleitung angeschlossen werden, aus der Wasser entnommen und durch den oder die Kanäle im Grill gefördert werden. Je nach Anwendung kann der Druck auf der Wasserleitung ausreichen, um das Wasser durch den Kanal oder die Kanäle zu fördern.

Je nach Ausführung und Dimensionierung der Vorrichtung hat das Kühlmittel beim Einströmen in den Kanal oder die Kanäle eine Temperatur zwischen 5°C und 40°C. Die Temperatur des Kühlmittels auf der Austrittsseite hängt von verschiedenen Faktoren (Strömungsgeschwindigkeit, Schmelzgrilltemperatur, Art des Kühlmittels, etc.) ab. Sie kann typischerweise in einem Bereich zwischen 40°C und 90°C liegen.

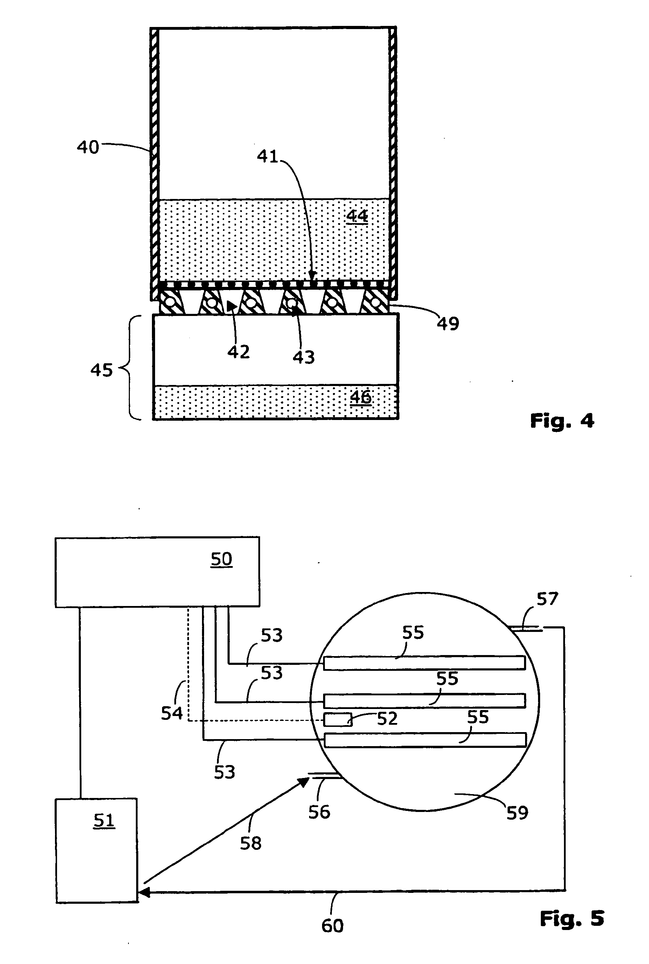

In einer weiteren Ausführungsform ist der Speicher 15 vorzugsweise mit einem Niveausensor 24 versehen (siehe Fig. 3 und 4), der den Füllstand im Reservoir 21 detektieren kann.

Durch die beschriebene Anordnung ist es möglich, einen kleinen Teil des Mediums aufzuschmelzen, in dem die Schmelzvorrichtung das Medium im Bereich des Grills 19 lokal erwärmt. Ein Anteil des aufgeschmolzenen Teils des Mediums tritt durch die Durchlässe 20 hindurch. In der gezeigten Ausführungsform befindet sich ein Speicher 15 unterhalb des Behälters 10 und des Grills 19. Der Speicher 15 weist ein Reservoir 21 auf, in welches das aufgeschmolzene Medium hinein fliesst. Um zu verhindern, dass mehr Medium in den Speicher 15 fliesst als gewünscht, kann die Schmelzvorrichtung abgeschaltet werden. Da sich Restwärme im System (Speicher 15, Grill 19, Behälter 10 und Medium) befindet, ist ein kontrolliertes Abschalten bei bekannten Systemen nicht möglich. Um dieses Problem zu beheben, ist gemäss Erfindung im Bereich der Durchlässe 20 eine Kühlvorrichtung angeordnet. In dem vorliegenden Ausführungsbeispiel wird eine Kühlflüssigkeit unmittelbar durch einen oder mehrere Kanäle 28 des Grills 19 geführt, um den Bereich der Durchlassöffnungen 20 zu kühlen. Dem Grill 19 wird die Wärme entzogen und der Schmelzvorgang wird kontrolliert unterbrochen. Damit wird die Viskosität des Mediums in diesem Bereich wieder erhöht und es dringt kein weiterer Anteil des Mediums in den Speicher 15 ein. Es findet keine Vernetzung des Mediums statt und es entstehen keine schädlichen Dämpfe, da das Medium durch die Kühlvorrichtung unterhalb einer kritischen Temperatur gehalten werden kann.

In der Ausführungsform gemäss Fig. 1 bis 3 sind die Schmelzvorrichtung in Form eines Gitters 19 mit Heizpatronen 25 und die Kühlvorrichtung in Form von einem oder mehreren Strömungskanälen 28 im Gitter 19 realisiert. Die Schmelzvorrichtung und die Kühlvorrichtung sind also beide in das Gitter 19 integriert, bzw. mit diesem Gitter 19 verbunden.

Im Folgenden werden weitere Merkmale und Elemente des Systems beschrieben, das in den Figuren 1 bis 3 dargestellt ist. Diese Merkmale und Elemente sind optional und können eingesetzt werden, um das System zu verbessern, bzw. um dessen Einsatzmöglichkeiten zu beeinflussen. Es ist ein schwenkbarer Deckel 11 vorgesehen, mit dem der Behälter 10 oben abgedeckt werden kann. Der Deckel 11 ist so gelagert, dass er um eine vertikale Drehachse 13 geschwenkt werden kann. Vorzugsweise hat der Deckel 11 einen Durchmesser D2, der nur geringfügig kleiner ist als der Innendurchmesser D1 des Behälters 10, wie in Fig. 2 angedeutet. Der Deckel 11 ist vorzugsweise auf der Oberseite mit einem Schwenkarm 30 versehen, der an einem Ende eine Ausnehmung 31 aufweist. In diese Ausnehmung 31 greift bei geschlossenem Deckel 11 eine Schliessmechanismus 29 ein, der an einer Seite des Behälters 10 sitzt. Diese Art des schwenkbaren Deckels 11 ermöglicht eine schnelle und einfache Reinigung des Behälters 10.

In der gezeigten Ausführungsform ist oberhalb des Deckels 11 vorzugsweise eine Inliner-Presse 12 angeordnet. Diese Presse 12 kann so ausgelegt sein, dass von oben ein kontrollierter Druck auf den Deckel 11 ausgeübt wird. Damit kann ein Druck auf das Medium ausgeübt werden, das sich in dem Behälter 10 befindet. Vorzugsweise ist die Inliner-Presse 12 mit einem Pneumatikzylinder versehen. Es kann auch ein Wegsensor integriert oder angebracht werden, der in die Auslegung einer Steuerung einbezogen wird.

Der Deckel 11 kann mit einer Folgeplatte 33 ausgestattet sein (siehe Fig. 2), die unterhalb des Deckels 11 sitzt und mit einer Dichtungsvorrichtung ausgerüstet ist, um ein Abdichten der Folgeplatte 33 gegen die Innenseite des Behälters 10 zu ermöglichen. Eine geeignete Dichtungsvorrichtung ist in der publizierten Europäischen Patentanmeldung EP 943583-A1 beschrieben. Die Dichtungsvorrichtung für die Folgeplatte des Systems kann so ausgebildet sein, dass sie ein aufblasbares Dichtungselement aufweist. Im aufgeblasenen Zustand bildet das Dichtungselement die Dichtungseinrichtung und liegt dichtend an der Behälterinnenfläche an. Es handelt sich also um eine flexibel anpressbare Dichtung. Mit dieser Art des Deckels 11 kann ein luftdicht abgeschlossenen System erzielt werden. Dies ist unter Umständen wünschenswert oder sogar vorgeschrieben, falls es sich um Medien handelt, die schädlich sind.

Das System umfasst zum Beispiel zusätzlich einen Motor 16, der über eine Welle 17 und eine Kupplung 18 mit einer Fördereinrichtung 32 verbunden ist, die im Bereich des Speichers 15 sitzt. Diese Fördereinrichtung 32 fördert aufgeschmolzenes Medium aus dem Bereich 22 des Reservoirs 21, wenn der Motor 16 läuft und eingekuppelt ist. Das Medium wird von der Fördereinrichtung 32 durch einen optionalen Filter 23 aus dem Speicher 15 heraus befördert. Es kann zum Beispiel ein beheizbarer Schlauch mit dem Speicher 15 verbunden sein, durch den das Medium zu einer Auftragevorrichtung (zum Beispiel in Form einer Klebepistole oder einer Auftragedüse) gefördert wird. Vorzugsweise handelt es sich bei der Fördereinrichtung 32 um eine Zahnradpumpe. Der Filter 23 kann vorzugsweise mit einem Überdruckventil versehen sein.

Eine weitere Vorrichtung zur Verwendung in einem System das ein Medium verarbeitet, gemäss Erfindung, ist in Fig. 4 schematisch im Schnitt dargestellt. Die gezeigte Vorrichtung umfasst einen Behälter 40 zur Aufnahme des Mediums 44. Es ist eine Schmelzvorrichtung 41 zum Bewirken einer Temperaturerhöhung vorgesehen, um einen Teil des Mediums 44 in einen Zustand niedrigerer Viskosität zu überführen (aufzuschmelzen). In dem gezeigten Beispiel ist die Schmelzvorrichtung als Schmelzgitter 41 ausgelegt, das sich beim Durchfliessen eines Stromes geeigneter Stromstärke erwärmt und diese Wärme lokal an das Medium 44 abgibt. Durch die Erwärmung wird ein Teil des Mediums 44 in einen Zustand niedrigerer Viskosität überführt (aufgeschmolzen). Die Vorrichtung weist einen Austrittsbereich 49 mit mehreren Durchlässen 42 auf. Ein Anteil des Teils des Mediums 44 mit niedrigerer Viskosität kann durch die Durchlässe 42 hindurch treten und wird in einem Speicher 45 aufgefangen. In der gezeigten Ausführungsform sind in dem Austrittsbereich 49 mehrere Kanäle 43 vorgesehen, die von einem Gas oder einer Flüssigkeit durchströmt werden können und dadurch den Austrittsbereich 49 zumindestens im Umfeld der Durchlässe 42 kühlen. In der Ausführungsform gemäss Fig. 4 sind die Schmelzvorrichtung in Form eines Schmelzgitters 41 und die Kühlvorrichtung in Form von Strömungskanälen 43 im Austrittsbereich 49 realisiert. Die Schmelzvorrichtung und die Kühlvorrichtung sind also separat ausgeführt, wobei beide Vorrichtungen, um einen zuverlässigen Betrieb zu ermöglichen, vorzugsweise benachbart angeordnet sind.

Im Folgenden werden weitere Merkmale und Elemente des Systems beschrieben, das in Fig. 4 dargestellt ist. Diese Merkmale und Elemente sind optional und können eingesetzt werden, um das System zu verbessern, bzw. um dessen Einsatzmöglichkeiten zu beeinflussen. Es kann ein Deckel oder eine Folgeplatte vorgesehen werden, mit dem der Behälter 40 oberhalb des Mediums 44 abgedeckt werden kann. Der Deckel kann zum Beispiel schwenkbar oder klappbar gelagert werden. Ein Deckel oder eine Folgeplatte ermöglicht eine schnelle und einfache Reinigung des Behälters 40.

Die Ausführungsform nach Fig. 4 kann mit einer Presse ausgestattet sein. Diese Presse kann so ausgelegt sein, dass von oben ein kontrollierter Druck auf das Medium 44 ausgeübt wird. Vorzugsweise ist die Presse mit einem Pneumatikzylinder versehen. Es kann auch ein Wegsensor integriert oder angebracht werden, der in die Auslegung einer Steuerung einbezogen wird.

Der Deckel bzw. die Folgeplatte, falls vorhanden, kann mit Dichtmitteln ausgerüstet sein, um ein Abdichten gegen die Innenseite des Behälters 40 zu ermöglichen. Ein geeignetes Dichtmittel ist in der bereits genannten Europäischen Patentanmeldung EP 943583-A1 beschrieben. Mit dieser Art der Dichtung kann ein luftdicht abgeschlossenen System erzielt werden. Dies ist unter Umständen wünschenswert oder sogar vorgeschrieben, falls es sich um Medien handelt, die schädlich sind.

Das System nach Fig. 4 kann eine Fördereinrichtung umfassen, um aufgeschmolzenes Medium 46 aus dem Speicher 45 heraus zu fördern. Die Fördereinrichtung kann zum Beispiel mit einem Filter und einem Überdruckventil versehen sein.

In Fig. 5 ist ein Blockdiagramm einer kombinierten Schmelz- und Kühlvorrichtung dargestellt. Die Elemente dieser Figur lassen sich generalisieren oder auch einzeln ausführen. Es ist eine Steuerung 50 vorgesehen, die über Leitungen 53 mit drei Heizpatronen 55 verbunden ist. Die Heizpatronen 55 sind in einen Schmelzgrill 59 integriert. Zusätzlich zu den Heizpatronen 55 ist der Grill 59 von einem oder mehreren Kühlkanälen durchzogen, die jedoch in Fig. 5 nicht sichtbar sind. Die Kühlkanäle können durch einen Einlass 56 mit Flüssigkeit oder Gas beschickt werden. Auf der anderen Seite des Systems ist eine Austrittsöffnung 57 vorgesehen. Es ist vorzugsweise ein Umlaufkühler 51 vorgesehen, welcher der Flüssigkeit bzw. dem Gas die Wärme entzieht, nachdem diese den Grill 59 durchströmt hat. Der Umlaufkühler 51 kann zum Beispiel mit Peltier Elementen, einem Kälteverdichter oder einem Luft - Wasser Wärmetauscher bestückt sein, oder es kann sich um einen Luftkühler handeln, der ein Gas durch die Kühlkanäle fördert. Die Verbindung zwischen dem Kühler 51 und dem Einlass 56 wird mit einem Rohr oder Schlauch 58 gewährleistet. Die Rückführung der Flüssigkeit oder des Gases erfolgt über ein Rohr oder Schlauch 60. Um eine Steuerung realisieren zu können, ist der Grill 59 mit mindestens einem Temperatursensor 52 versehen. Der Sensor 52 steht über eine Leitung 54 mit der Steuerung 50 in Verbindung.

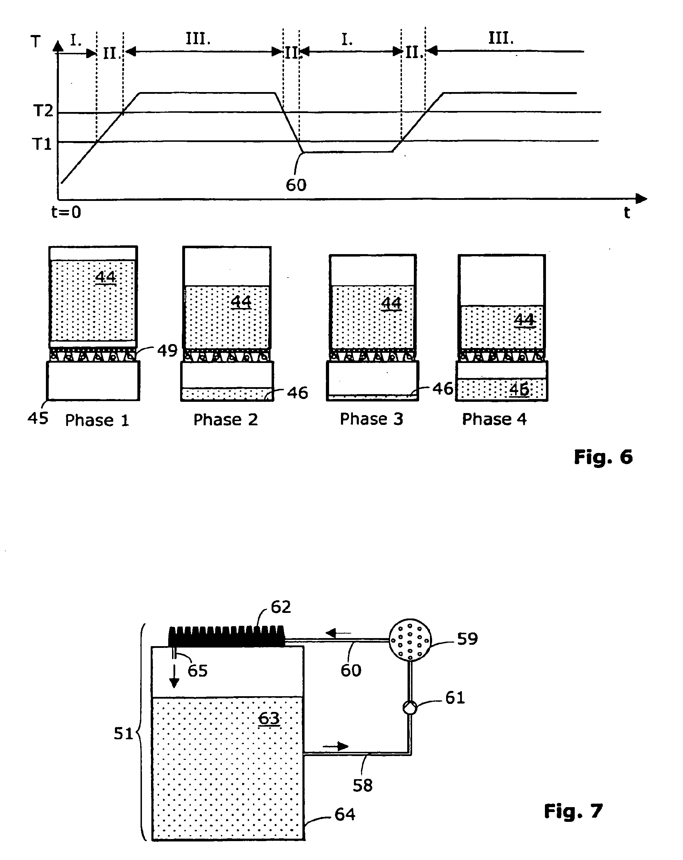

Der Umlaufkühler 51 kann zum Beispiel mit einem Luft - Wasser Wärmetauscher 62 bestückt sein, wie in Fig. 7 schematisch dargestellt. In dem gezeigten Beispiel umfasst die Kühlvorrichtung einen Tank 64, der Kühlwasser 63 enthält. Eine Pumpe 61 fördert Wasser 63 aus dem Tank 64 durch eine Leitung 58 und einen oder mehrere Kanäle in einem Grill 59. Dort entzieht das Wasser dem Grill 59 Wärme. Dabei erwärmt sich das Wasser. Es wird dann durch eine Leitung 60 in einen Wärmetauscher 62 geführt, der eine möglichst grosse Oberfläche, z.B. in Form von Kühlrippen, aufweist. Der Wärmetauscher 62 entzieht dem Wasser Wärmeenergie indem er sie an die Umgebungsluft überträgt. Der Wärmetauscher 62 kann zum Beispiel mit einem Ventilator ausgestattet sein. Nachdem das Wasser abgekühlt ist, wird es über einen Stutzen 65 zurück in den Tank 64 geführt. Die Pumpe 61 kann zum Beispiel von der Steuerung 50 an- und abgeschaltet werden. Vorzugsweise umfasst die Steuerung 50 eine Pumpensteuerung, die es ermöglicht, die Förderleistung der Pumpe 61 je nach Bedarf zu variieren.

Die Steuerung 50 weist vorzugsweise regelbare Stromquellen auf, um einen Strom entsprechender Stärke über die Leitungen 53 durch die Heizpatronen 55 fliessen zu lassen.

Vorzugsweise ist die Steuerung 50 extern programmierbar. Die Programmierung kann über einen Rechner erfolgen, der das Gesamtsystem steuert. Die Steuerung 50 kann auch einen eigenen Mikroprozessor umfassen, der Steuerungsaufgaben übernimmt und das erfindungsgemässe Verfahren steuert.

Die Steuerung 50 kann auch dazu ausgelegt sein, Heizpatronen anzusteuern, die im Bereich des Speichers 15 bzw. 45 angeordnet sind. Vorzugsweise ist auch im Speicher 15 bzw. 45 ein Temperatursensor angeordnet.

Anhand eines Beispiels, das in Fig. 6 gezeigt ist, wird die Funktionsweise der Steuerung beschrieben. In Fig. 6 sind verschiedene Phasen 1 bis 4 dargestellt. Unterhalb des Temperaturdiagramms ist eine schematisierte Vorrichtung gemäss Erfindung dargestellt, um die verschiedenen Zustände beschreiben zu können. Die Kurve 61 gibt die Temperatur eines Mediums im Durchlassbereich als Funktion der Zeit t wieder.

Zum Zeitpunkt t=0 ist das Medium 44 in der Vorrichtung fest oder pastös. Die Steuerung 50 steuert die Heizpatronen 55 über die Leitungen 53 an, um die Temperatur des Mediums 44 zu erhöhen (Zeitabschnitt I.) Während dieser Phase 1 wird die Vorrichtung hochgefahren und der Speicher 45 ist leer. Das Medium 44 hat einen Temperaturbereich zwischen T1 und T2 in dem er zu schmelzen beginnt. Bei PUR beträgt T1 vorzugsweise ca. 45°C und T2 = 85°C. Um die Vorrichtung zuverlässig betreiben zu können, wurde bei der gezeigten Ausführungsform die Steuerung 50 so ausgelegt, dass Temperaturen oberhalb von T2 angesteuert werden, um ein Aufschmelzen zu erzielen. Während dem Zeitabschnitt II. wird die Temperatur des Mediums 44 stetig angehoben, bis sie dann T2 überschreitet. Nun ist ein Teil des Mediums 44 fliessfähig und läuft durch den Grill 49 in den Speicher 45 (Phase 2). Im Zeitabschnitt III. läuft ein Anteil des aufgeschmolzenen Mediums 44 in den Speicher 45 ab. Der Füllstand im Speicher 45 kann zum Beispiel mit einem Sensor gemessen werden. Sobald ein gewünschter Anteil des Mediums als fliessfähiges Medium 46 im Speicher 45 vorhanden ist, schaltet die Steuerung 50 die Schmelzvorrichtung ab und die Kühlvorrichtung an. Während dem Übergangszeitraum II. wird somit ein Teil des Mediums 44 wieder in einen pastösen, zähflüssigeren oder sogar festen Zustand überführt und es fliesst kein Medium aus dem Behälter in den Speicher 45. Während dem Zeitabschnitt I. ist der Schmelzprozess zumindest vorübergehend unterbrochen. Medium 46 kann aus dem Speicher 45 entnommen werden. Dadurch reduziert sich die Menge des aufgeschmolzenen Mediums 46 im Speicher 45, wie in dem mit Phase 3 gekennzeichneten Bild dargestellt. Ein Sensor erkennt nun, dass die Menge des aufgeschmolzenen Mediums 46 im Speicher 45 nicht mehr ausreicht, um den Bedarf zu decken. Es wird nun ein neuer Schmelzvorgang (Zeitabschnitt II.) eingeleitet, in dem die Heizpatronen 55 angeschaltet werden. Während dem Zeitabschnitt III. fliesst dann erneut aufgeschmolzenes Medium 46 in den Speicher 45 (Phase 4). Bei der gezeigten Darstellung handelt es sich um ein Beispiel, um eine bevorzugte Ausführungsform der Erfindung zu erläutern. Die Steuerung kann auch anders ausgelegt werden.

In einer bevorzugten Ausführungsform ist die Steuerung 50 so ausgelegt, dass keine Temperaturen oberhalb einer kritischen Temperatur erzeugt werden. Die kritische Temperatur kann für PUR zum Beispiel bei ca. 160°C fest gelegt werden.

In einer weiteren Ausführungsform ist der Speicher 45 vorzugsweise mit einem Niveausensor versehen (nicht in Fig. 4 gezeigt), der den Füllstand im Reservoir detektieren kann. Der Niveausensor kann Bestandteil eine Füllstandsreglung sein, die es ermöglicht den Füllstand zu kontrollieren und Massnahmen auszulösen, um weiteres Medium 44 aufzuschmelzen, oder um das Schmelzen zu stoppen, in dem die Kühlvorrichtung zugeschaltet wird. In einer weiteren Ausführungsform ist der Niveausensor einstellbar, in dem man ihn dreht und fest schraubt. So kann je nach Einsatz des Systems vorher festgelegt werden, wie viel Medium im Reservoir vorhanden sein muss, bevor der Sensor anspricht.

In einer weiteren Ausführungsform wird das Medium in einem Beutel geliefert, der typischerweise aus Aluminium besteht (Inliner-Verpackung genannt). Bei dem Beutel wird der Boden entfernt, bevor der Beutel samt Medium in den Behälter 10 oder 40 gestellt wird. Dann wird der Deckel 11, so vorhanden, geschlossen. Wenn Medium im unteren Bereich der Behälter 10 bzw. 40 geschmolzen und entnommen wurde, drückt die Presse, so vorhanden, von oben nach. Dabei wir der Beutel im unteren Bereich der Behälters 10 bzw. 40 zusammengepresst und bildet eine Art Kragen, der einen Abdichtung gegenüber der Innenseite des Behälters 10 bzw. 40 bewirkt.

Vorzugsweise ist der Behälter 10 oder 40 mit einem Scharnier (nicht in den Figuren sichtbar) und mit Schnellverschlüssen 14 (siehe Fig. 1) versehen. Löst man die Schnellverschlüsse 14, so kann der Behälter 10 bzw. 40 samt dem Deckel 11, so vorhanden, um eine horizontale Achse weggeklappt werden, deren Lage durch das Scharnier festgelegt ist. Durch das Aufklappen ist eine gründliche Reinigung des Behälters und des Grills möglich.

Die Systeme können optional mit einem Rücklauf ausgerüstet sein, um Medium, das nicht verbraucht wurde, in den Speicher 15 bzw. 45 zurück zu führen.

In einer weiteren Ausführungsform ist der Grill 19 bzw. der Grill 49 demontierbar ausgeführt. Dies ermöglicht eine einfachere Reinigung bzw. ein Austauschen gegen andere Grills.

Der Grill 19 bzw. 49 umfasst vorzugsweise ein Material, das die Wärme gut ableitet bzw. verteilt. Die Oberfläche des Grills sollte stets möglichst überall die gleiche Temperatur haben. Ausserdem sollte der Grill eine ausreichende mechanische Stabilität aufweisen und sollte sich unter Temperatureinflüssen nicht deformieren. Das Material des Grills sollte möglichst wenig Energie (Wärmemenge) speichern, da sonst das Abkühlen länger dauern würde. Besonders geeignet sind Aluminium, Kupfer und Legierungen mit einem oder beiden Materialien.

Typischerweise hat der Grill einen Gesamtdurchmesser zwischen 150mm und 500mm. Der Durchmesser der Durchlässe richtet sich stark nach den Anforderungen, die das zu schmelzende Medium stellt.

Vorzugsweise ist der Speicher 15 bzw. 45 mit einer Heizvorrichtung versehen, um zu gewährleisten, dass das aufgeschmolzene Medium, das sich im Reservoir befindet, nicht erstarrt. Zusätzlich oder alternativ kann der Speicher 15 bzw. 45 auch isoliert sein.

Die Heizvorrichtung kann in verschiedenster Art und Weise realisiert werden. Vorzugsweise verwendet man eine Widerstandheizung. Die Heizpatronen können zum Beispiel Heizelemente umfassen, die durch einen Strom entsprechender Stromstärke erhitzt werden können. Vorzugsweise sind die Heizelemente in Keramik oder in eine Metallhülse eingebettet. Es können auch Widerstandsbahnen oder dergleichen auf den Grill aufgebracht werden, die sich erhitzen wenn Strom durch geleitet wird. Wie in Fig. 4 gezeigt, kann die Schmelzvorrichtung auch einen Grill 41 oder ein ähnliches Gebilde umfassen, das Heizdrähte aufweist, die sich bei Strombeaufschlagung erhitzen.

Anstatt den Durchlassbereich der Vorrichtung mit einem Gas oder mit einer Flüssigkeitskühlung zu versehen, können auch Peltier-Elemente unmittelbar im Durchlassbereich angeordnet sein. Durch ein geeignetes Ansteuern der Peltier-Elemente kann der Durchlassbereich dann kontrolliert geheizt und abgekühlt werden.

Ein fliessfähiges Medium, worunter im Rahmen der vorliegenden Beschreibung Medien mit temperaturabhängigen Viskositäten, also auch Pasten zu verstehen sind, ist ein Medium, das auf eine Fördertemperatur erwärmt werden muss, um eine genügende Fliessfähigkeit zu erreichen, und das anschliessende Abgeben dieses Mediums zu ermöglichen.

Gemäss Erfindung kommt folgendes Verfahren zur Anwendung, wenn ein bestimmter Anteil des festen oder pastösen Mediums benötigt wird:
- Abfragen mittels Niveauüberwachung bzw. Füllstandsanzeige, ob ausreichend geschmolzenes Medium (z.B. fliessfähiger Klebstoff) im Speicher vorhanden ist,
- Falls ja, Entnehmen des Mediums aus dem Speicher und, je nach Bedarf, Nachfüllen des Speichers mit geschmolzenem Medium,
- Falls nein, lokales Erhitzen des festen oder pastösen Mediums in dem Behälter mittels Heizungsvorrichtung, um die Viskosität des Mediums zu senken bis dieses durch einen oder mehrere Durchlässe in den Speicher abläuft,
- Während des Erhitzens wiederholtes Abfragen mittels Niveauüberwachung bzw. Füllstandsanzeige, ob nun ausreichend geschmolzenes Medium in dem Speicher vorhanden ist,
- Falls ja, Ausschalten der Heizungsvorrichtung und Anschalten der Kühlvorrichtung, um weiteres Schmelzen von Medium zu verhindern bzw. zu reduzieren.

Idealerweise ist das Verfahren so ausgelegt, dass das Medium im Bereich der Durchlässe jeweils knapp unter der Schmelztemperatur bzw. knapp über der Schmelztemperatur gehalten wird, um dem System nicht unnötig Energie zuführen bzw. aus dem System abführen zu müssen.

Eine weitere Ausgestaltung des erfindungsgemässen Verfahrens zeichnet sich dadurch aus, dass das Nachschmelzen des Mediums mittels des Schmelzvorrichtung gemäss der Drehzahl der Zahnradpumpe geregelt wird. Diese Drehzahl ergibt sich aus dem Verbrauch an aufgeschmolzenem Medium. Die notwendige Schmelzleistung kann dann entsprechend geregelt werden. Bei einer solchen Regelung kann man vorzugsweise den Zylinderdruck, die Heizleistung der Schmelzvorrichtung und die Zeit berücksichtigen.

Die Vorrichtung und das erfindungsgemässe System kann so ausgelegt werden, dass von wenigen Gramm bis zu 100kg/h Medium aufgeschmolzen werden können. Bisherige Systeme sind nicht dazu in der Lage wenige Gramm Medium aufzuschmelzen, da die im System vorhandene Wärmeenergie immer ein unkontrollierbares Nachschmelzen verursacht. Es wird also bei kleinem Bedarf zu viel Medium aufgeschmolzen. Dieser Nachteil wird durch die Erfindung behoben.

Gemäss Erfindung kann die Vorrichtung abgekühlt werden, bevor eine Reinigung ausgeführt wird.

Die Erfindung eignet sich besonders zum Abgeben bzw. Verarbeiten von Klebstoff mit temperaturunstabiler Viskosität. Es können gemäss Erfindung problemlos auch feuchtigkeitsvernetzende Klebstoffe abgeben werden.

## Patentansprüche

1. System, das ein fliessfähiges Medium (46) bereitstellt, das bei Temperaturerhöhung eine Änderung zu einem Zustand niedrigerer Viskosität erfährt, mit einer Vorrichtung, die Folgendes umfasst:
- einen Behälter (10; 40) zur Aufnahme eines Mediums (44),
- eine Schmelzvorrichtung (19, 25; 41; 50, 53, 55) zum Bewirken der Temperaturerhöhung, um einen Teil des Mediums (44) in einen Zustand niedrigerer Viskosität zu überführen,
- einen Austrittsbereich (19; 49; 59) mit mindestens einem Durchlass (20; 42) für den Teil des Mediums mit niedrigerer Viskosität,
- einen Speicher (15; 45) für den Teil des Mediums mit niedrigerer Viskosität **dadurch gekennzeichnet, dass**,
der Speicher (15; 45) mit einem Niveau- oder Füllstandssensor (24) ausgestattet ist,
eine Kühlvorrichtung (19, 26, 27; 43; 50, 51, 56, 57, 58, 60) vorhanden ist, um den Austrittsbereich (19; 49; 59) und/oder die Schmelzvorrichtung (19; 41; 55) aktiv kühlen zu können, nachdem ein Anteil des Teils des Mediums mit niedrigerer Viskosität durch den Durchlass (20; 42) hindurch in den Speicher (15; 45) getreten ist **und dass** das System eine Pumpe (16) zum Fördern des Teils des Mediums mit niedrigerer Viskosität umfasst
**und dass** das System einen Deckel (11) mit Folgeplatte (33) umfasst, mit der über eine Presse (12) ein Druck auf das Medium (44) ausübbar ist, wobei die Folgeplatte (33) vorzugsweise eine flexibel anpressbare Dichtung aufweist.

2. System nach Anspruch 1, **dadurch gekennzeichnet, dass** die Schmelzvorrichtung Heizpatronen (25; 55), Widerstandbahnen oder Heizdrähte (41) umfasst, die mit Strom beheizbar sind.

3. System nach Anspruch 1 oder 2, **dadurch gekennzeichnet, dass** die Schmelzvorrichtung einen Temperatursensor (52) und eine Steuerung (50) umfasst.

4. System nach Anspruch 1 oder 2, **dadurch gekennzeichnet, dass** der Austrittsbereich einen Grill (19; 49; 59) umfasst, der mehrere Durchlässe (20; 42) aufweist.

5. System nach einem der vorhergehenden Ansprüche, **dadurch gekennzeichnet, dass** der Austrittsbereich von mindestens einem Kanal (28; 43) durchzogen ist, der von einem Kühlmittel (63) oder Gas durchströmbar ist.

6. System nach Anspruch 5, **dadurch gekennzeichnet, dass** die Kühlvorrichtung einen Umlaufkühler (51) umfasst, welcher dem Kühlmittel (63) Wärme entzieht, nachdem dieses den Austrittsbereich durchströmt hat.

7. System nach einem der vorhergehenden Ansprüche, **dadurch gekennzeichnet, dass** die Kühlvorrichtung und die Schmelzvorrichtung separat ausgeführt sind.

8. System nach Anspruch 1, **dadurch gekennzeichnet, dass** der Speicher (15; 45) beheizbar ist.

9. System nach einem der vorhergehenden Ansprüche, **dadurch gekennzeichnet, dass** die Kühlvorrichtung einen Kälteverdichter, Wärmetauscher oder Peltier-Kühler umfasst.

10. System nach einem der vorhergehenden Ansprüche, **dadurch gekennzeichnet, dass** das System einen oder mehrere beheizbare Schläuche und Abgabevorrichtungen umfasst.

11. System nach einem der vorhergehenden Ansprüche, **dadurch gekennzeichnet, dass** es sich bei dem Medium (44) um Polyurethan-Leim (PUR) handelt.

12. Verfahren zum Bereitstellen eines fliessfähigen Mediums (46) nach Bedarf, wobei zähflüssiges, festes oder pastöses Medium in einem Behälter (10; 40) bereitgestellt wird, mit.den folgenden Schritten:
- Abfragen, ob ausreichend fliessfähiges Medium (46) in einem Speicher (15; 45) vorhanden ist,
- falls ja, Entnehmen des fliessfähigen Mediums (46) aus dem Speicher (15; 45),
- falles nein, lokales Erhitzen des zähflüssigen, festen oder pastösen Mediums (44) in dem Behälter (10; 40) mittels einer Schmelzvorrichtung (19, 25; 41; 50, 53, 55), um die Viskosität des Mediums zu senken bis dieses durch einen oder mehrere Durchlässe (20; 42) in den Speicher (15; 45) abläuft,
- während des Erhitzens wiederholtes Abfragen, ob nun ausreichend fliessfähiges Medium (46) in dem Speicher (15; 45) vorhanden ist,
- falls ja, Ausschalten der Schmelzvorrichtung (19, 25; 41; 50, 53, 55) und Anschalten einer Kühlvorrichtung (19, 26, 27; 43; 50, 51, 56, 57, 58, 60), um weiteres Schmelzen von Medium zu verhindern bzw. zu reduzieren.

13. Verfahren nach Anspruch 12, **dadurch gekennzeichnet, dass** eine Pumpe (16) zur Entnahme des fliessfähigen Mediums (46) aus dem Speicher (15; 45) angeschaltet wird, sobald ausreichend fliessfähiges Medium (46) in dem Speicher (15; 45) vorhanden ist.

14. Verfahren nach Anspruch 12, **dadurch gekennzeichnet, dass** von einer Folgeplatte (33) im Behälter (10; 40) bei einem bestimmten Füllstand durch das Medium (44) eine bestimmte Position eingenommen wird und wenn der Füllstand geändert wird, von der Folgeplatte (33) eine entsprechende Folgeposition eingenommen wird.

15. Verfahren nach Anspruch 14, **dadurch gekennzeichnet, dass** die Folgeplatte (33) von einer Presse (12) gegen das Medium (44) in dem Behälter (10; 40) angedrückt wird.

16. Verfahren nach Anspruch 15, **dadurch gekennzeichnet, dass**
- die Presse (12) eingeschaltet wird, nachdem die Schmelzvorrichtung (19, 25; 41; 50, 53, 55) eingeschaltet wurde, um Druck auf das zähflüssige, feste oder pastöse Medium auszuüben,
- die Presse (12) vor dem Einschalten der Kühlvorrichtung (19, 26, 27; 43; 50, 51, 56, 57, 58, 60) drucklos geschaltet wird.

## Claims

1. System which provides a flowable medium (46) which is subject to a change to a state of lower viscosity during increase in temperature, with an apparatus which comprises the following:
- a container (10; 40) for receiving a medium (44);
- a melting apparatus (19, 25; 41; 50, 53, 55) for effecting an increase in temperature in order to transform a portion of the medium (44) to a state of lower viscosity;
- an outlet region (19; 49; 59) with at least one passageway (20; 42) for the portion of the medium with lower viscosity;
- a reservoir (15; 45) for the portion of the medium with lower viscosity;
**characterized in that** the reservoir (15; 45) is equipped with a level or filling level sensor (24), a cooling apparatus (19, 26, 27; 43; 50, 51, 56, 57, 58, 60) is provided in order to enable active cooling of the outlet region (19; 49; 59) and/or the melting apparatus (19; 41; 55) once a portion of the medium with lower viscosity has passed through the passageway (20; 42) into the reservoir (15; 45),
**and that** the system comprises a pump (16) for conveying the portion of the medium with lower viscosity,
**and that** the system comprises a cover (11) with a follower plate (33) with which a pressure can be exerted on the medium (44) via a press (12), with the follower plate (33) preferably comprising a seal which can be pressed on in a flexible way.

2. System according to claim 1, **characterized in that** the melting apparatus comprises heating cartridges (25; 55), resistance lines or heating wires (41) which can be heated with current.

3. System according to claim 1 or 2, **characterized in that** the melting apparatus comprises a temperature sensor (52) and a controller (50).

4. System according to claim 1 or 2, **characterized in that** the outlet region comprises a grating (19; 49; 59) which comprises several passageways (20; 42).

5. System according to one of the preceding claims, **characterized in that** the outlet region is penetrated by at least one duct (28; 43) through which a cooling agent (63) or gas can flow.

6. System according to claim 5, **characterized in that** the cooling apparatus comprises a recirculating cooler (51) which extracts heat from the cooling agent (63) once it has flowed through the outlet region.

7. System according to one of the preceding claims, **characterized in that** the cooling apparatus and the melting apparatus are separately realized.

8. System according to claim 1, **characterized in that** the reservoir (15; 45) is heatable.

9. System according to one of the preceding claims, **characterized in that** the cooling apparatus comprises a refrigerating compressor, heat exchanger or Peltier cooler.

10. System according to one of the preceding claims, **characterized in that** the system comprises one or several heatable hoses and delivery apparatuses.

11. System according to one of the preceding claims, **characterized in that** the medium (44) concerns polyurethane adhesive (PUR).

12. Method for providing a flowable medium (46) as required, with a viscous, solid or pasty medium being provided in a container (10; 40), comprising the following steps:
- querying whether sufficient flowable medium (46) is present in a reservoir (15; 45);
- if yes, removal of the flowable medium (46) from the reservoir (15; 45);
- if no, local heating of the viscous, solid or pasty medium (44) in the container (10; 40) by means of a melting apparatus (19, 25; 41; 50, 53, 55) in order to lower the viscosity of the medium until the same runs off through one or several passageways (20; 42) into the reservoir (15; 45);
- repeated querying during the heating whether sufficient flowable medium (46) is now available in the reservoir (15; 45);
- if yes, deactivation of the melting apparatus (19, 25; 41; 50, 53,55) and activation of a cooling apparatus (19, 26, 27; 43; 50, 51, 56, 57, 58, 60) in order to prevent or reduce further melting of medium.

13. Method according to claim 12, **characterized in that** a pump (16) for removing the flowable medium (46) from the reservoir (15; 45) is switched on once sufficient flowable medium (46) is present in the reservoir (15; 45).

14. Method according to claim 12, **characterized in that** a specific position is assumed by a follower plate (33) in the container (10; 40) at a specific filling level of the medium (44) and a respective following position is assumed by the follower plate (33) when the filling level is changed.

15. Method according to claim 14, **characterized in that** the follower plate (33) is pressed by a press (12) against the medium (44) in the container (10; 40).

16. Method according to claim 15, **characterized in that**
- the press (12) is activated once the melting apparatus (19, 25; 41; 50, 53, 55) was switched on in order to exert pressure on the viscous, solid or pasty medium,
- the press (12) is switched to non-pressure prior to the activation of the cooling apparatus (19, 26, 27; 43; 50, 51, 56, 57, 58, 60).

## Revendications

1. Système qui met à disposition un milieu apte à l'écoulement (46) qui subit lors d'une augmentation de la température une modification vers un état de moindre viscosité, qui comprend un dispositif présentant les éléments suivants :
- un récipient (10 ; 40) permettant de loger un milieu (44),
- un dispositif de fusion (19, 25 ; 41 ; 50, 53, 55) permettant de provoquer une augmentation de la température afin de convertir une partie du milieu (44) vers un état de moindre viscosité,
- une zone de sortie (19 ; 49 59) comportant au moins un passage (20 ; 42) pour la partie du milieu présentant une moindre viscosité,
- un réservoir (15 ; 45) pour la partie du milieu présentant une moindre viscosité,
**caractérisé en ce que** le réservoir (15 ; 45) est équipé d'un détecteur de niveau ou de remplissage (24), un dispositif de refroidissement (19, 26, 27 ; 43 ; 50, 51, 56, 57, 58, 60) existe pour pouvoir refroidir activement la zone de sortie (19 ; 49 ; 59) et/ou le dispositif de fusion (19 ; 41 ; 55) après qu'une fraction de la partie du milieu présentant une moindre viscosité a pénétré à travers le passage (20 ; 42) dans le réservoir (15 ; 45),
**et en ce que** le système comporte une pompe (16) destinée à déplacer la partie du milieu présentant une moindre viscosité,
**et en ce que** le système comporte un couvercle (11) présentant un plateau suiveur (33) avec lequel, via une presse (12), il est possible d'exercer une pression sur le milieu (44), le plateau suiveur (33) présentant de préférence une garniture flexible pouvant être serrée.

2. Système selon la revendication 1, **caractérisé en ce que** le dispositif de fusion comporte des cartouches chauffantes (25 ; 55), des pistes de résistance ou des fils chauffants (41) qui peuvent être chauffés par le courant.

3. Système selon la revendication 1 ou 2, **caractérisé en ce que** le dispositif de fusion comporte un détecteur de température (52) et une commande (50).

4. Système selon la revendication 1 ou 2, **caractérisé en ce que** la zone de sortie comporte un gril (19 ; 49 ; 59) qui présente plusieurs passages (20 ; 42).

5. Système selon l'une des revendications précédentes, **caractérisé en ce que** la zone de sortie passe par au moins un canal (28 ; 43) qui peut être traversé par un agent réfrigérant (63) ou un gaz.

6. Système selon la revendication 5, **caractérisé en ce que** le dispositif de refroidissement comporte un condenseur en circuit fermé (51) qui retire de la chaleur de l'agent réfrigérant (63) après que celui-ci a traversé la zone de sortie.

7. Système selon l'une des revendications précédentes, **caractérisé en ce que** le dispositif de refroidissement et le dispositif de fusion sont exécutés séparément.

8. Système selon la revendication 1, **caractérisé en ce que** le réservoir (15 ; 45) peut être chauffé.

9. Système selon l'une des revendications précédentes, **caractérisé en ce que** le dispositif de refroidissement comporte un compresseur, un échangeur de chaleur ou un thermoélément à effet Peltier.

10. Système selon l'une des revendications précédentes, **caractérisé en ce que** le système comporte un ou plusieurs flexibles et dispositifs de distribution pouvant être chauffés.

11. Système selon l'une des revendications précédentes, **caractérisé en ce qu'**il s'agit concernant le milieu (44) de colle de polyuréthane (PUR).

12. Procédé de mise à disposition d'un milieu apte à l'écoulement (46) selon besoin, dans lequel un milieu visqueux, solide ou pâteux est mis à disposition dans un récipient (10 ; 40), comportant les étapes suivantes :
- demande pour savoir si suffisamment de milieu apte à l'écoulement (46) est présent dans un réservoir (15 ; 45),
- dans le cas où la réponse est oui, retrait du milieu apte à l'écoulement (46) du réservoir (15 ; 45),
- dans le cas où la réponse est non, chauffage local du milieu visqueux, solide ou pâteux (44) dans le récipient (10 ; 40) au moyen d'un dispositif de fusion (19, 25 ; 41 ; 50, 53, 55) afin de réduire la viscosité du milieu jusqu'à ce qu'il s'écoule par un ou plusieurs passages (20 ; 42) dans le réservoir (15 ; 45),
- pendant le chauffage, demande répétée pour savoir si suffisamment de milieu apte à l'écoulement (46) se trouve alors dans un réservoir (15 ; 45),
- dans le cas où la réponse est oui, coupure du dispositif de fusion (19, 25 ; 41 ; 50, 53, 55) et commutation d'un dispositif de refroidissement (19, 26, 27 ; 43 ; 50, 51, 56, 57, 58, 60) pour éviter ou réduire la poursuite de la fusion du milieu.

13. Procédé selon la revendication 12, **caractérisé en ce qu'**une pompe (16) est commutée pour retirer le milieu apte à l'écoulement (46) du réservoir (15 ; 45) dès que suffisamment de milieu apte à l'écoulement (46) existe dans le réservoir (15 ; 45).

14. Procédé selon la revendication 12, **caractérisé en ce qu'**avec un niveau de remplissage déterminé par le milieu (44), une position déterminée est adoptée par un plateau suiveur (33) dans le récipient (10 ; 40), et lorsque le niveau de remplissage est modifié, une position de suivi correspondante est adoptée par le plateau suiveur (33).

15. Procédé selon la revendication 14, **caractérisé en ce que** le plateau suiveur (33) est comprimé par une presse (12) contre le milieu (44) dans le récipient (10 ; 40).

16. Procédé selon la revendication 15, **caractérisé en ce que**
- la presse (12) est commutée après que le dispositif de fusion (19, 25 ; 41 ; 50, 53, 55) a été mis en route pour exercer une pression sur le milieu visqueux, solide ou pâteux,
- la presse (12) est mise hors pression avant la mise en route du dispositif de refroidissement (19, 26, 27 ; 43 ; 50, 51, 56, 57, 58, 60).
